# FASCICULE DE BREVET EUROPEEN

(11) **EP 1 839 973 B1**
(45) Date de publication et mention de la délivrance du brevet: **10.09.2008**
(21) Numéro de dépôt: 07300875.7
(22) Date de dépôt: 19.03.2007
(51) Int. Cl.: B60S 1/34

(54) **Dispositif de contrôle et de régulation de la force d'appui sur une surface vitrée d'un balai d'essuie-glace pour véhicule automobile**
Vorrichtung zur Kontrolle und Regulierung der Auflagekraft eines Scheibenwischerarms auf einer Glasfläche für Kraftfahrzeuge
Device for controlling and adjusting the force with which a windscreen-wiper blade for an automobile presses against a glass surface

(30) Priorité: 30.03.2006 FR 0651097
(43) Date de publication de la demande: 03.10.2007
(73) Titulaire: PEUGEOT CITROËN AUTOMOBILES S.A., 78140 Vélizy Villacoublay (FR)
(72) Inventeur: Jeuffe, Gérard, 78580 Bazemont (FR); Magnier, Nicolas, 92140 Clamart (FR)

(56) Documents cités:
- EP-A- 0 522 338
- EP-A1- 0 539 249
- DE-A1- 3 837 193
- US-A- 4 718 139
- US-A- 4 777 695

## Description

La présente invention est relative à un dispositif destiné à contrôler et maintenir sensiblement constante, égale à une valeur déterminée, la force d'appui d'un balai d'essuie glace sur une surface vitrée telle notamment que celle du pare brise avant ou de la lunette arrière d'un véhicule automobile.

On connaît parfaitement dans la technique la structure la plus généralement adoptée pour réaliser un balai d'essuie glace entraîné en rotation selon un mouvement alternatif continu contre la surface vitrée à balayer, ce balai pivotant autour de l'axe d'un arbre de commande porté par l'habitacle du véhicule et actionné par un moteur réversible.

Plus particulièrement un tel balai se compose d'une pièce dite entraîneur, solidarisée par un écrou ou moyen de fixation analogue à l'extrémité de l'arbre de commande en rotation alternée, cette pièce étant usuellement protégée par un capot cachant l'écrou. Sur cette même pièce, est articulé, autour d'un axe transversal, un carter de support allongé qui peut être relevé par pivotement sur cet axe transversal pour écarter le balai de la surface vitrée et permettre d'accéder à certains des éléments qui le constituent pour entretien ou réparation éventuelle.

Le carter de support contient et se prolonge, au voisinage de son extrémité opposée, à l'axe transversal de relèvement par une tige métallique logée dans le carter et supportant en bout, articulé sur cette tige, un palonnier. Sur ce palonnier sont à leur tour accrochées et articulées des griffes flexibles, permettant de le solidariser avec une raclette souple, présentant une lèvre plate qui porte directement sur la surface vitrée à balayer.

La partie terminale de la tige qui pénètre à l'intérieur du carter comporte un moyen d'accrochage pour l'extrémité d'un organe de rappel élastique, du genre ressort en spirale, dont l'extrémité opposée est reliée à l'axe transversal de relèvement par l'intermédiaire d'un autre élément à ressort, agencé de telle sorte qu'il permette le maintien du carter dans l'une ou l'autre de deux positions d'équilibre, dans lesquelles il est, soit relevé pour remplacement ou entretien de la raclette, soit rabattu sur la surface vitrée, la raclette étant alors en appui sur celle-ci en exerçant sur elle un effort d'application qui est fonction de la tension de ce ressort.

De façon connue dans la technique, l'agencement d'un tel ressort d'accrochage est dit « à trois points ».

On sait par ailleurs que le pare brise ou la lunette arrière des véhicules modernes ont de plus en plus des formes aérodynamiques, avec des profils largement bombés ou galbés, de telle sorte que l'inclinaison de la raclette souple du balai d'essuie glace qui se déplace à leur contact avec le mouvement de va et vient imposé autour de l'axe transversal d'articulation avec l'entraîneur, varie en permanence et notamment évolue au fur et à mesure de ce balayage autour de l'arbre de commande.

En particulier, l'angle formé entre le carter prolongé par la tige de support du palonnier portant la raclette et la pièce entraîneur fixée sur l'arbre de commande, dit angle de site, se modifie selon la position de la raclette sur la surface vitrée entre des limites qui peuvent osciller entre 0 et 10° dans certaines réalisations.

Il en résulte une variation concomitante de la force d'application de la raclette sur la surface vitrée au cours de son déplacement, d'autant plus grande que l'angle de site est plus important, due à l'élongation variable du ressort de rappel avec l'angle de site, ce qui nuit à la qualité du contact de la lèvre du balai et à l'efficacité du balayage par suite de l'écrasement parfois trop important, parfois insuffisant de la raclette sur la vitre.

De plus, les variations constatées en ce qui concerne la force d'appui de la raclette ont un effet négatif sur la longévité de celle-ci, en accroissant son usure en fonctionnement.

Les brevets EP 522 338, EP 539 249 et US 4 718 139 concernent des mécanismes pour balai d'essuie glace prévus pour faire varier la force d'application de la raclette de ce balai sur une surface vitrée au cours de son déplacement au contact de celle-ci, dans lesquels le paramètre qui est pris en compte pour agir sur l'inclinaison variable de cette raclette, est la vitesse du véhicule. Aucun de ces documents n'envisage une solution qui soit adaptée à la variation de l'angle de site en fonction de la courbure ou du galbe de la surface vitrée elle-même, indépendamment de la vitesse.

La présente invention a pour objet un dispositif de contrôle et de régulation de la force d'appui de la raclette d'un tel essuie glace en toute position de celle-ci au cours de ses déplacements contre une surface vitrée à profil largement bombé ou galbé, cette régulation liée à la forme et à la géométrie de cette surface s'effectuant automatiquement et de manière passive, sans exiger aucune source d'énergie particulière autre que celle qui assure l'entraînement du balai dans son mouvement de va et vient.

A cet effet, le dispositif considéré, pour un balai d'essuie glace comportant un entraîneur fixé sur un arbre de commande en rotation alternée, muni d'un axe transversal sur lequel est articulé un carter entourant une tige métallique prolongeant ce carter et assurant le support d'un palonnier ou analogue, portant une raclette souple munie d'une lèvre destinée à venir en appui sur la surface vitrée à balayer, et un ressort de rappel principal logé dans le carter, travaillant en traction, disposé entre la tige et l'entraîneur, ce ressort étant agencé pour permettre au carter de prendre une quelconque de deux positions d'équilibre dans lesquelles respectivement la raclette est, soit relevée pour être écartée de la surface vitrée, soit appliquée sur cette surface, se caractérise en ce que l'entraîneur comporte un poussoir agissant sur un ressort auxiliaire, travaillant en compression, logé dans le carter avec le ressort de rappel principal, solidarisé à une extrémité de la tige d'une part, et coopérant à l'autre extrémité avec le poussoir d'autre part, de telle sorte que, selon la variation de l'angle de site, entre l'entraîneur et le carter par suite du pivotement de celui-ci autour de l'axe transversal du fait du profil bombé de la surface vitrée, l'effort de compression du ressort auxiliaire s'oppose à l'effort de traction exercé par le ressort principal en maintenant sensiblement constante la résultante de ces deux efforts et en conséquence la force d'appui de la raclette sur la surface vitrée.

Dans un mode de réalisation préféré de l'invention, le poussoir est constitué par une pièce intermédiaire réunie à une extrémité à l'axe transversal de l'entraîneur et présente à son extrémité opposée une surface profilée en forme de came, en contact avec le ressort auxiliaire pour exercer sur celui-ci un effort de compression variable avec l'angle de site.

Dans ce même mode de réalisation et selon une caractéristique complémentaire, les deux ressorts sont disposés côte à côte dans le carter, entre la tige et l'entraîneur.

Avantageusement, le ressort auxiliaire est un ressort en spirale dans l'axe duquel est logée une pièce d'appui sur laquelle porte la surface profilée en forme de came du poussoir.

De préférence, la pièce d'appui comporte une tête demi-sphérique, appliquée contre le poussoir et prolongée par un doigt cylindrique engagé axialement à l'intérieur du ressort auxiliaire avec un jeu minimal afin de limiter les frottements lors du glissement de la tête sur la surface profilée en forme de came consécutivement à la rotation du carter autour de l'axe transversal avec la variation de l'angle de site.

Avantageusement, l'extrémité du ressort auxiliaire travaillant en compression, opposée à la surface profilée en forme de came du poussoir, est solidaire de la tige avec l'extrémité du ressort principal travaillant en traction pour supprimer tout jeu en fonctionnement.

De préférence, les deux ressorts sont liés respectivement aux deux branches parallèles d'une fourche fixée en bout de la tige.

Selon encore une autre caractéristique, le ressort auxiliaire travaillant en compression est logé avec un jeu minimal dans un guide externe formant douille, monté dans le carter pour éviter le flambage de ce ressort sous l'effet de l'effort exercé sur celui-ci par la surface de contact en forme de came du poussoir.

Avantageusement, le guide externe est assemblé par collage ou soudage sur le carter.

Dans un autre mode de réalisation, le poussoir est constitué par une pièce rotative, montée dans le carter et tourillonnant autour d'un axe complémentaire, lié au carter et disposé perpendiculairement à l'axe transversal de pivotement de celui-ci, cette pièce rotative comportant des moyens d'accrochage, d'une part avec le ressort de rappel principal, d'autre part avec le ressort auxiliaire fixé à la tige.

De préférence, l'axe complémentaire autour duquel tourillonne la pièce rotative est fixé par collage ou soudage sur le fond du carter.

Selon une autre caractéristique, l'axe complémentaire de la pièce rotative comporte un épaulement de réception et de maintien de cette pièce en position axiale.

Avantageusement, les extrémités des ressorts principal et auxiliaire sont accrochées sur la pièce rotative pour accommoder le pivotement de celle-ci.

Grâce à l'ensemble de ces dispositions et quel que soit le mode de réalisation adopté, la croissance de l'angle de site du balai d'essuie glace provoque une traction sur le ressort principal et simultanément une compression sur le ressort auxiliaire ou vice versa, ces deux efforts se compensant mutuellement à tout instant de sorte que l'appui de la lèvre de la raclette sur la surface vitrée reste sensiblement constant en tout point, lors du balayage de cette surface.

D'autres caractéristiques d'un dispositif de contrôle et de régulation de la force d'appui d'un balai d'essuie glace établi conformément à l'invention, apparaîtront encore à travers la description qui suit de deux exemples de réalisation, donnés à titre indicatif et non limitatif, en référence aux dessins annexés sur lesquels :
- La Figure 1 est une vue schématique en élévation d'un balai d'essuie glace, d'un type en lui-même connu dans la technique.
- La Figure 2 est une vue de face du pare brise d'un véhicule automobile, équipé d'un balai conforme à celui de la Figure 1, représenté dans deux positions distinctes contre la surface de ce pare brise.
- La Figure 3 est une autre vue du balai d'essuie glace des Figures 1 et 2, illustrant la variation de son angle de site en fonction de la position qu'il occupe contre la surface du pare brise.
- La Figure 4 est une vue en perspective, à plus grande échelle, des dispositions mises en oeuvre dans un balai d'essuie glace perfectionné conformément à l'invention.
- La Figure 5 est une autre vue du balai d'essuie glace de la Figure 4.
- La Figure 6 est une vue en coupe, à plus grande échelle, d'un détail du balai illustré sur les Figures 4 et 5.
- La Figure 7 est une vue en perspective, analogue à la Figure 4 mais relative à un autre mode de réalisation.
- La Figure 8 est une vue en coupe à plus grande échelle du balai d'essuie glace selon la variante de la Figure 7.

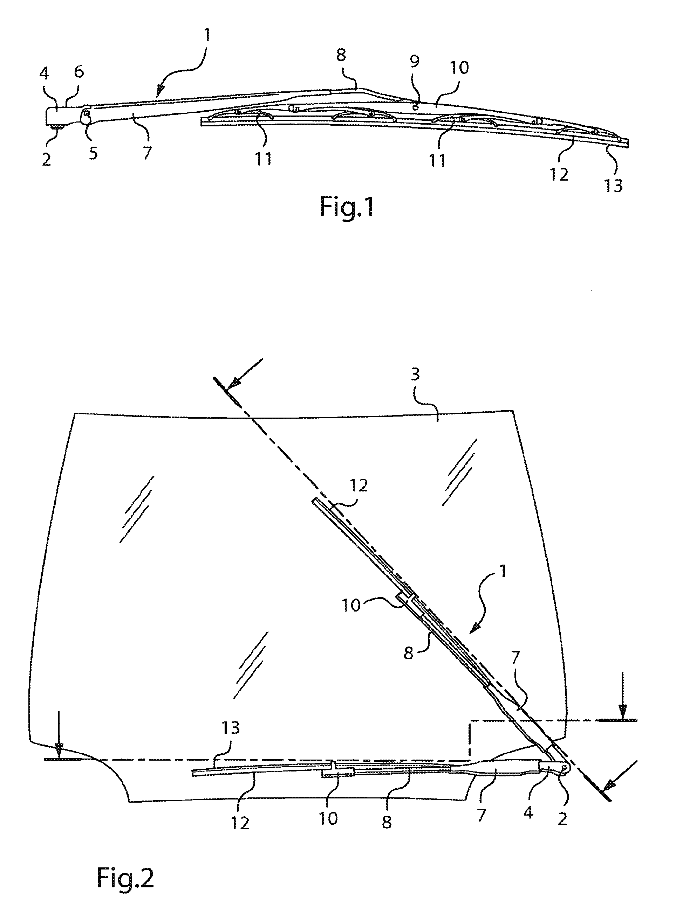

Le balai d'essuie glace 1, représenté en élévation sur la Figure 1, se compose essentiellement d'un arbre de commande 2 associé à un moteur d'entraînement réversible (non représenté), propre à imprimer au balai un mouvement de rotation alternatif continu contre une surface vitrée 3 (Figure 2) qui peut être notamment celle du pare brise ou de la lunette arrière d'un véhicule automobile.

Le balai 1 comporte un entraîneur 4, immobilisé sur l'arbre de commande 2 par tout moyen de fixation approprié, notamment à l'aide d'un écrou ou similaire, l'ensemble étant recouvert d'un capot de protection 6 dont le détail n'importe pas directement à l'invention.

L'entraîneur 4 comporte par ailleurs un axe transversal 5 autour duquel s'articule un carter de support 7 allongé, le balai 1 pouvant être ainsi relevé par pivotement autour de cet axe, pour entretien ou réparation, en l'écartant momentanément de la surface vitrée 3 contre laquelle il est normalement appliqué.

Le carter de support 7, qui est creux et qui enferme des moyens décrits plus loin pour permettre d'exercer sur le balai un effort d'application convenable sur la surface 3, se prolonge, à son extrémité opposée à l'entraîneur 4, par une tige métallique 8 portant à son extrémité un axe 9 sur lequel est articulé un palonnier 10.

Sur ce palonnier 10 sont montées des griffes flexibles telles que 11, permettant de le solidariser avec une raclette souple 12 présentant une lèvre plate 13 destinée à porter directement sur la surface vitrée pour en assurer le balayage, et en particulier éliminer l'eau qui ruisselle sur cette surface, éventuellement débarrasser celle-ci des salissures qui ont pu s'y déposer lors de l'utilisation du véhicule.

Les dispositions brièvement décrites ci-dessus sont classiques et pratiquement communes à tous les systèmes d'essuie glace utilisés dans la pratique.

Dans les véhicules modernes, la surface vitrée 3 du pare brise ou de la lunette arrière présente un profil panoramique avec un galbe parfois accentué, de sorte que la rotation du balai 1 autour de son arbre de commande 2, lui impose une rotation relative autour de l'axe transversal 5 d'articulation de l'entraîneur 4 et du carter 7, et par suite, par l'intermédiaire du palonnier 10, de la raclette 12 qu'il supporte et donc de la lèvre souple 13 de cette dernière vis-à-vis du plan tangent à la surface vitrée au droit de la ligne d'appui de cette lèvre sur celle-ci.

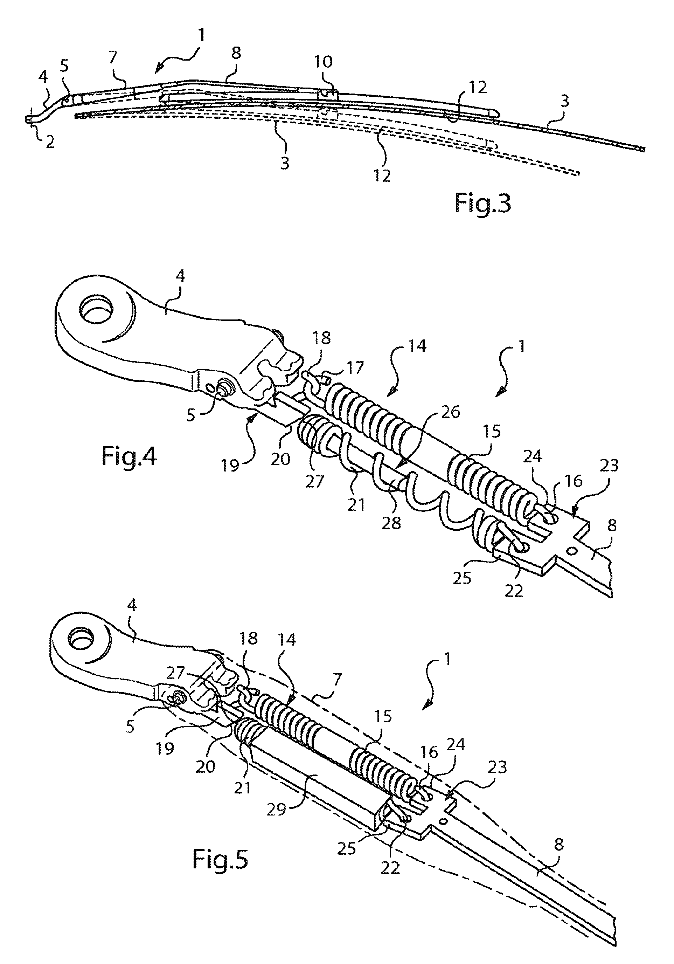

Cette variation de l'angle formé entre la direction longitudinale du carter et la surface vitrée, dit angle de site, est matérialisée sur la Figure 3 qui représente le positionnement de la raclette 12 du balai 1 en deux positions distinctes contre la surface 3, par exemple celles qu'occupe le balai sur la vue en plan de la Figure 2.

Un tel angle de site peut varier dans des proportions non négligeables lors du fonctionnement du balai au cours de chaque période de balayage en rotation alternative sous l'effet de son entraînement par l'arbre de commande 2, notamment entre 0 et 10° dans certaines réalisations où la surface vitrée contre laquelle s'applique le balai présente un profil particulièrement bombé.

Dans les réalisations classiques, la force d'appui de la raclette 12 sur la surface 3, est obtenue grâce au montage à l'intérieur du carter 7 d'un dispositif à ressort 14 qui est schématisé sur les Figures 4 et 5 selon un premier mode de réalisation du perfectionnement apporté à ce dispositif par l'invention.

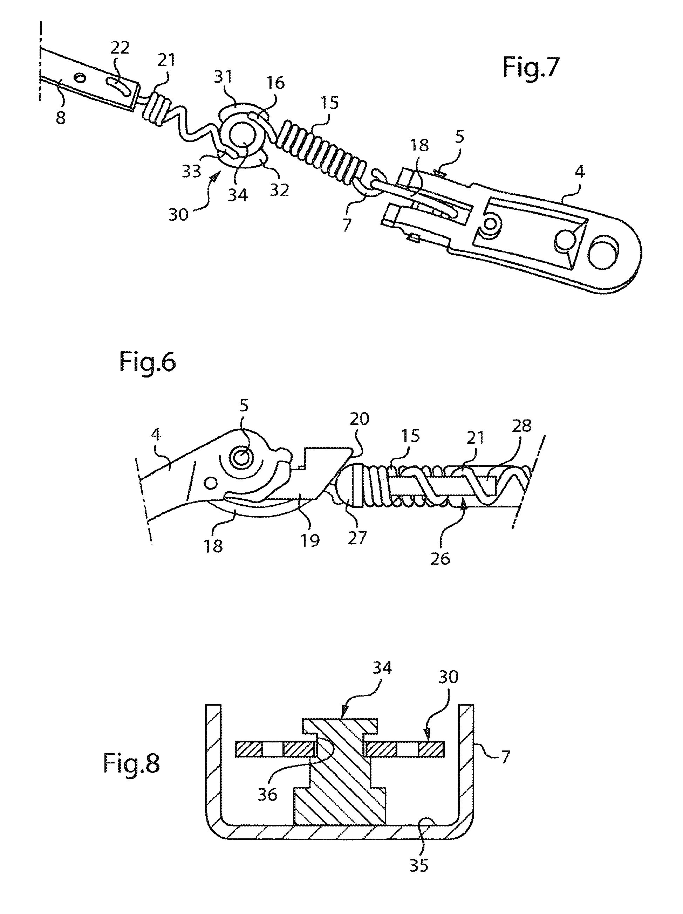

Ce dispositif comporte un ressort principal 15, notamment un ressort en spirale, dont l'extrémité 16, distante de l'entraîneur 4, est raccordée en bout de la tige métallique 8 et qui est réuni à son extrémité opposée 17, à un autre système élastique comprenant un ressort complémentaire 18, (voir également la Figure 6), ce ressort complémentaire étant lui-même rendu solidaire de l'axe transversal 5 autour duquel pivote le carter de support 7 par rapport à l'entraîneur 4.

Ce dispositif, dit à trois points, permet notamment le relèvement du balai 1 dans l'une et l'autre des deux positions d'équilibre déjà explicitées, dans lesquelles il est, soit relevé et écarté de la surface vitrée pour remplacement ou entretien de la raclette, soit rabattu sur cette surface en fonctionnement normal. Un tel dispositif est en lui-même connu dans la technique et n'exige pas d'être plus complètement décrit ici.

Lors des variations de l'angle de site du balai 1 au cours du balayage de la surface vitrée 3, le ressort principal 15 qui travaille en traction entre l'entraîneur 4 et la tige métallique 8, voit sa tension également varier et par suite la force d'appui qu'il impose à la lèvre plate 13 de la raclette souple 12 appliquée contre cette surface.

Il en résulte une moins bonne qualité dans l'essuyage de la surface et une détérioration plus rapide de cette dernière en fonction de ces variations.

Conformément à l'invention, l'entraîneur 4 est muni d'un poussoir 19, dont l'extrémité 20 est profilée en forme de came, cette dernière venant agir sur un second ressort en spirale 21, dit ressort auxiliaire et disposé à proximité et parallèlement au ressort principal 15. Toutefois, alors que ce ressort 15 est agencé et monté dans le carter 7 de manière à travailler en traction, le second ressort 21 est prévu pour travailler en compression en fonction de l'effort qui est exercé sur lui par la surface formant came 20 du poussoir 19.

Le ressort auxiliaire 21 est fixé, à son extrémité 22 opposée au poussoir 19, en bout de la tige métallique 8, cette dernière présentant de préférence la forme d'une fourche 23 dont les branches parallèles, respectivement 24 et 25, permettent de lui rattacher les extrémités des deux ressorts 15 et 21, qui s'étendent parallèlement l'un à l'autre à l'intérieur du carter de support 7, la liaison avec la tige 8 étant aménagée afin de réduire et de préférence supprimer tout jeu en fonctionnement.

De préférence, le ressort auxiliaire 21 qui travaille en compression sous l'effet de la surface formant came 20 du poussoir 19, est associé à une pièce d'appui 26, dont la vue en élévation de la Figure 6 illustre plus clairement le détail, cette pièce 26 comportant notamment une tête demi-sphérique 27 qui porte contre la surface 20 et transmet ainsi l'effort du poussoir 19 au ressort.

Avantageusement, la tête 27 se prolonge par un doigt cylindrique 28, engagé selon l'axe du ressort 21 avec un jeu minimal, afin de limiter les frottements lors de la compression de ce ressort sous l'effet du glissement de la tête 27 sur la surface formant came 20 du poussoir 19 lorsque ce dernier pivote autour de l'axe transversal 5, par suite de la variation de l'angle de site du balai.

Comme illustré sur la Figure 5, le ressort auxiliaire 21 travaillant en compression est de préférence logé à l'intérieur d'un guide externe 29 en forme de douille creuse, permettant d'éviter le flambage de ce ressort sous l'effet de l'effort exercé par le poussoir 19 en fonction de la variation de l'angle de site.

Le guide 29 contenant le ressort 21, peut être assemblé et fixé sur le carter 7 par collage, soudage ou autre procédé approprié.

Les Figures 7 et 8 illustrent une variante de réalisation pour le montage des ressorts principal 15 travaillant en traction et auxiliaire 21 travaillant en compression, entre l'entraîneur 4 et la tige métallique 8 supportant la raclette souple du balai.

Dans cette variante, l'extrémité 17 du ressort principal travaillant en traction 15 est toujours réunie, par le ressort complémentaire 18, au système à trois points 18 utilisé dans la variante précédente et monté autour de l'axe transversal 5, pour assurer la même fonction de relevage ou d'application du balai par rapport à la surface vitrée.

Toutefois dans ce cas, l'extrémité opposée 16 de ce même ressort principal est réunie à une pièce rotative 30, notamment à une oreille latérale 31 prévue sur celle-ci. Cette pièce comporte également une oreille opposée 32 à laquelle est reliée l'extrémité 33 du ressort auxiliaire 21, travaillant en compression et dont l'extrémité opposée 22 est reliée en bout de la tige métallique 8 prolongeant le carter de support 7 comme précédemment.

La pièce 30 est montée libre en rotation autour d'un axe 34 de la manière schématiquement illustrée sur la Figure 8, l'axe 34 étant immobilisé contre le fond 35 du carter 7 par collage ou soudage.

Cet axe comporte un épaulement en creux 36 pour la réception de la pièce 30, ainsi maintenue sur l'axe dans le sens longitudinal, tout en étant libre de pivoter autour de ce dernier en fonction de la résultante des efforts, respectivement de traction exercé par le ressort 15 d'une part, de compression du ressort 21 d'autre part.

Dans l'une et l'autre des deux variantes ainsi envisagées, on comprend que toute variation de l'angle de site, se traduisant par une variation de l'intensité de la force d'appui de la lèvre plate de la raclette souple du balai sur la surface vitrée, par suite de la modification de l'effort exercé par le ressort principal travaillant en traction en raison de la modification de l'élongation de ce ressort, s'accompagne d'un effort de compression simultané exercé sur le ressort auxiliaire, qui compense l'effet précédent.

Du fait de cette compensation qui se produit automatiquement sur le ressort auxiliaire de compression, s'opposant selon le cas à l'augmentation ou à la diminution de l'effort d'application de la raclette du balai créé par le ressort principal travaillant en traction, la force d'appui résultante sur la lèvre plate de la raclette sur la surface vitrée, reste pratiquement constante, quel que soit l'angle de site pris par le balai au cours de ses déplacements contre cette surface.

Dans la première variante de réalisation, les deux ressorts travaillent en parallèle et en sens inverse, la poussée exercée sur le ressort auxiliaire de compression étant contenue par les moyens prévus pour empêcher le flambage de ce ressort.

Dans la seconde variante, la pièce tournante qui accommode simultanément la traction du premier ressort et la compression du second, pivote autour de son axe en réalisant la même compensation, la lèvre de la raclette restant appliquée avec le même effort sur la surface vitrée quelle que soit la variation de l'angle de site due au profil de cette surface.

Bien entendu, il va de soi que l'invention ne se limite pas à l'exemple de réalisation plus spécialement décrit et représenté ci-dessus en référence aux dessins annexés ; elle en embrasse au contraire toutes les variantes.

## Revendications

1. Dispositif de contrôle et de régulation de la force d'appui sur une surface vitrée d'un balai d'essuie glace (1) pour véhicule automobile, comportant un entraîneur (4) fixé sur un arbre (2) de commande en rotation alternée, muni d'un axe transversal (5) sur lequel est articulé un carter (7) entourant une tige métallique (8) prolongeant ce carter et assurant le support d'un palonnier (10) ou analogue, portant une raclette souple (12) munie d'une lèvre plate (13) destinée à venir en appui sur la surface vitrée (3) à balayer, et un ressort de rappel principal (15) logé dans le carter, travaillant en traction, disposé entre la tige et l'entraîneur, ce ressort étant agencé pour permettre au carter de prendre une quelconque de deux positions d'équilibre dans lesquelles respectivement la raclette est, soit relevée pour être écartée de la surface vitrée, soit appliquée sur cette surface, **caractérisé en ce que** l'entraîneur (4) comporte un poussoir (19) agissant sur un ressort auxiliaire (21), travaillant en compression, logé dans le carter (7) avec le ressort de rappel principal (15), solidarisé à une extrémité de la tige (8) d'une part, et coopérant à l'autre extrémité avec le poussoir (19) d'autre part, de telle sorte que, selon la variation de l'angle de site, entre l'entraîneur et le carter par suite du pivotement de celui-ci autour de l'axe transversal du fait du profil bombé de la surface vitrée, l'effort de compression du ressort auxiliaire s'oppose à l'effort de traction exercé par le ressort principal en maintenant sensiblement constante la résultante de ces deux efforts et en conséquence la force d'appui de la raclette sur la surface vitrée.

2. Dispositif selon la revendication 1, **caractérisé en ce que** le poussoir (19) est constitué par une pièce intermédiaire réunie à une extrémité à l'axe transversal (5) de l'entraîneur (4) et présente à son extrémité opposée une surface profilée en forme de came (20), en contact avec le ressort auxiliaire (21) pour exercer sur celui-ci un effort de compression variable avec l'angle de site.

3. Dispositif selon l'une des revendications 1 ou 2, **caractérisé en ce que** les deux ressorts (15 ,21) sont disposés côte à côte dans le carter (7), entre la tige (8) et l'entraîneur (4).

4. Dispositif selon l'une des revendications 2 ou 3, **caractérisé en ce que** le ressort auxiliaire (21) est un ressort en spirale dans l'axe duquel est logée une pièce d'appui (26) sur laquelle porte la surface profilée en forme de came (20) du poussoir (19).

5. Dispositif selon la revendication 4, **caractérisé en ce que** la pièce d'appui (26) comporte une tête demi-sphérique (27), appliquée contre le poussoir (19) et prolongée par un doigt cylindrique (28) engagé axialement à l'intérieur du ressort auxiliaire (21) avec un jeu minimal.

6. Dispositif selon l'une quelconque des revendications 2 à 5, **caractérisé en ce que** l'extrémité (22) du ressort auxiliaire (21) travaillant en compression, opposée à la surface profilée en forme de came (20) du poussoir (19), est solidaire de la tige (8) avec l'extrémité (16) du ressort principal (15) travaillant en traction.

7. Dispositif selon la revendication 6, **caractérisé en ce que** les deux ressorts (15,21) sont liés respectivement aux deux branches parallèles (24,25) d'une fourche (23) fixée en bout de la tige (8).

8. Dispositif selon l'une quelconque des revendications 1 à 7, **caractérisé en ce que** le ressort auxiliaire (21) travaillant en compression est logé avec un jeu minimal dans un guide externe (29) formant douille, monté dans le carter (7).

9. Dispositif selon la revendication 8, **caractérisé en ce que** le guide externe (29) est assemblé par collage ou soudage sur le carter (7).

10. Dispositif selon l'une des revendications 1 ou 2, **caractérisé en ce que** le poussoir est constitué par une pièce rotative (30), montée dans le carter (7) et tourillonnant autour d'un axe complémentaire (34), lié au carter et disposé perpendiculairement à l'axe transversal (5) de pivotement de celui-ci, cette pièce rotative comportant des moyens d'accrochage (31,32), d'une part avec le ressort de rappel principal (15), d'autre part avec le ressort auxiliaire (21)fixé à la tige (8).

11. Dispositif selon la revendication 10, **caractérisé en ce que** l'axe complémentaire (34) autour duquel tourillonne la pièce rotative (30) est fixé par collage ou soudage sur le fond du carter (7).

12. Dispositif selon l'une des revendications 10 ou 11, **caractérisé en ce que** l'axe complémentaire (34) de la pièce rotative comporte un épaulement de réception (36) et de maintien de cette pièce en position axiale.

13. Dispositif selon l'une quelconque des revendications 10 à 12, **caractérisé en ce que** les extrémités des ressorts principal (15) et auxiliaire (21) sont accrochées sur la pièce (30) rotative pour accommoder le pivotement de celle-ci.

## Claims

1. Device for controlling and regulating the pressure on a glazed surface of a windscreen wiper blade (1) for a motor vehicle, comprising a drive element (4) attached to a reciprocating rotation control shaft (2), furnished with a transverse spindle (5) on which is articulated a casing (7) surrounding a metal arm (8) extending this casing and providing the support for a bar (10) or similar element, supporting a flexible blade (12) furnished with a flat lip (13) designed to press on the glazed surface (3) to be wiped, and a main return spring (15) housed in the casing, working in traction, placed between the arm and the drive element, this spring being arranged to allow the casing to assume any one of two positions of equilibrium in which respectively the blade is either raised in order to be moved away from the glazed surface, or applied to this surface, **characterized in that** the drive element (4) comprises a button (19) acting on an auxiliary spring (21), working in compression, housed in the casing (7) with the main return spring (15), fixedly attached at one end of the arm (8) on the one hand, and interacting at the other end with the button (19) on the other hand, so that, according to the variation of the angle of elevation, between the drive element and the casing as a result of the pivoting of the latter about the transverse spindle due to the curved profile of the glazed surface, the compression force of the auxiliary spring opposes the traction force exerted by the main spring while keeping substantially constant the resultant of these two forces and consequently the pressure of the blade on the glazed surface.

2. Device according to Claim 1, **characterized in that** the button (19) consists of an intermediate part joined at one end to the transverse spindle (5) of the drive element (4) and has at its opposite end a surface profiled in the shape of a cam (20), in contact with the auxiliary spring (21) in order to exert on the latter a compression force that can vary with the angle of elevation.

3. Device according to one of Claims 1 or 2, **characterized in that** the two springs (15, 21) are placed side by side in the casing (7) between the arm (8) and the drive element (4).

4. Device according to one of Claims 2 or 3, **characterized in that** the auxiliary spring (21) is a coil spring in the centre line of which is housed a bearing part (26) on which the surface profiled in the shape of a cam (20) of the button (19) rests.

5. Device according to Claim 4, **characterized in that** the bearing part (26) comprises a hemispherical head (27), pressed against the button (19) and extended by a cylindrical finger (28) engaged axially inside the auxiliary spring (21) with a minimal clearance.

6. Device according to any one of Claims 2 to 5, **characterized in that** the end (22) of the auxiliary spring (21) working in compression, opposite to the surface profiled in the shape of a cam (20) of the button (19), is fixedly attached to the arm (8) with the end (16) of the main spring (15) working in traction.

7. Device according to Claim 6, **characterized in that** the two springs (15, 21) are connected respectively to two parallel branches (24, 25) of a fork (23) attached at the end of the arm (8).

8. Device according to any one of Claims 1 to 7, **characterized in that** the auxiliary spring (21) working in compression is housed with a minimal clearance in an external guide (29) forming a socket, mounted on the casing (7).

9. Device according to Claim 8, **characterized in that** the external guide (29) is bonded or welded to the casing (7).

10. Device according to one of Claims 1 or 2, **characterized in that** the button consists of a rotary part (30), mounted in the casing (7) and swivelling about an additional spindle (34), connected to the casing and placed perpendicularly to the transverse spindle (5) for the pivoting of the latter, this rotary part comprising means (31, 32) for coupling on the one hand with the main return spring (15), on the other hand with the auxiliary spring (21) attached to the arm (8).

11. Device according to Claim 10, **characterized in that** the additional spindle (34) about which the rotary part (30) swivels is bonded or welded to the bottom of the casing (7).

12. Device according to one of Claims 10 or 11, **characterized in that** the additional spindle (34) of the rotary part comprises a shoulder (36) for receiving and holding this part in the axial position.

13. Device according to any one of Claims 10 to 12, **characterized in that** the ends of the main spring (15) and auxiliary spring (21) are coupled to the rotary part (30) in order to accommodate the pivoting of the latter.

## Patentansprüche

1. Vorrichtung zum Steuern und Regulieren der Auflagekraft eines Kraftfahrzeug-Scheibenwischerblatts an einer Scheibenoberfläche, mit einem Träger (4), der an einer hin und her drehbaren Steuerwelle (2) befestigt ist und mit einer transversalen Achse (5) versehen ist, an dem ein Gehäuse (7) angelenkt ist, das einen Metallstab (8) umgibt, der dieses Gehäuse verlängert und die Unterstützung eines Schwinghebels (10) oder dergleichen sicherstellt, der ein nachgiebiges Wischblatt (12) trägt, das mit einer flachen Lippe (13) versehen ist, die dazu vorgesehen ist, sich auf der zu überstreichenden Glasoberfläche (3) abzustützen, und einer Hauptrückstellfeder (15), die sich in dem Gehäuse befindet und auf Zug arbeitet und zwischen dem Stab und dem Träger angeordnet ist, wobei diese Feder dazu ausgelegt ist, dem Gehäuse zu ermöglichen, irgendeine von zwei Gleichgewichtspositionen einzunehmen, in denen das Wischblatt entweder abgehoben ist, um von der Glasoberfläche beabstandet zu sein, oder auf diese Oberfläche gedrückt wird, **dadurch gekennzeichnet, dass** der Träger (4) einen Drücker (19) aufweist, der auf eine Hilfsfeder (21) einwirkt, die in Kompression arbeitet und sich zusammen mit der Hauptrückstellfeder (15) in dem Gehäuse (7) befindet und einerseits mit einem Ende des Stabs (8) fest verbunden ist und andererseits am anderen Ende mit dem Drücker (19) zusammenwirkt, derart, dass je nach Ortswinkeländerung zwischen dem Träger und dem Gehäuse infolge der Schwenkung des Letzteren um die transversale Achse auf Grund des gekrümmten Profils der Glasscheibe die Kompressionskraft der Hilfsfeder der Zugkraft, die von der Hauptfeder ausgeübt wird, entgegenwirkt und dabei die Resultierende dieser zwei Kräfte und folglich die Abstützkraft des Wischblatts auf der Glasoberfläche im Wesentlichen konstant hält.

2. Vorrichtung nach Anspruch 1, **dadurch gekennzeichnet, dass** der Drücker (19) durch ein Zwischenteil gebildet ist, das an einem Ende mit der transversalen Achse (5) des Trägers (4) vereinigt ist und an seinem gegenüberliegenden Ende eine Profiloberfläche in Form eines Nockens (20) aufweist, die mit der Hilfsfeder (21) in Kontakt ist, um auf diese eine mit dem Ortswinkel veränderliche Kompressionskraft auszuüben.

3. Vorrichtung nach einem der Ansprüche 1 oder 2, **dadurch gekennzeichnet, dass** die zwei Federn (15, 21) in dem Gehäuse (7) zwischen dem Stab (8) und dem Träger (4) nebeneinander angeordnet sind.

4. Vorrichtung nach einem der Ansprüche 2 oder 3, **dadurch gekennzeichnet, dass** die Hilfsfeder (21) eine Schraubenfeder ist, längs deren Achse ein Abstützteil (26) vorgesehen ist, auf dem sich die Profiloberfläche in Form eines Nockens (20) des Drückers (19) abstützt.

5. Vorrichtung nach Anspruch 4, **dadurch gekennzeichnet, dass** das Abstützteil (26) einen halbkugelförmigen Kopf (27) aufweist, der gegen den Drücker (19) drückt und durch einen zylindrischen Finger (28) verlängert ist, der mit dem Innenraum der Hilfsfeder (21) mit minimalem Spiel axial in Eingriff ist.

6. Vorrichtung nach einem der Ansprüche 2 bis 5, **dadurch gekennzeichnet, dass** das Ende (22) der in Kompression arbeitenden Hilfsfeder (21), das sich entgegengesetzt zu der Profiloberfläche in Form eines Nockens (20) des Drückers (19) befindet, mit dem Stab (8) und mit dem Ende (16) der auf Zug arbeitenden Hauptfeder (15) fest verbunden ist.

7. Vorrichtung nach Anspruch 6, **dadurch gekennzeichnet, dass** die zwei Federn (15, 21) mit zwei parallelen Zinken (24, 25) einer am Ende des Stabs (8) befestigten Gabel (23) verbunden sind.

8. Vorrichtung nach einem der Ansprüche 1 bis 7, **dadurch gekennzeichnet, dass** die Hilfsfeder (21), die in Kompression arbeitet, sich mit minimalem Spiel in einer äußeren Führung (29) befindet, die eine in dem Gehäuse (7) angebrachte Hülse bildet.

9. Vorrichtung nach Anspruch 8, **dadurch gekennzeichnet, dass** die äußere Führung (29) durch Kleben oder Schweißen am Gehäuse (7) angebracht ist.

10. Vorrichtung nach einem der Ansprüche 1 oder 2, **dadurch gekennzeichnet, dass** der Drücker durch ein drehbares Teil (30) gebildet ist, das in dem Gehäuse (7) angebracht ist und sich um eine komplementäre Achse (34) dreht, die mit dem Gehäuse verbunden ist und senkrecht zu der transversalen Schwenkachse (5) angeordnet ist, wobei dieses drehbare Teil Mittel (31, 32) zum Verhaken einerseits an der Hauptrückstellfeder (15) und andererseits an der am Stab (8) befestigten Hilfsfeder (21) enthält.

11. Vorrichtung nach Anspruch 10, **dadurch gekennzeichnet, dass** die komplementäre Achse (34), um die das drehbare Teil (30) umläuft, durch Kleben oder Schweißen am Boden des Gehäuses (7) befestigt ist.

12. Vorrichtung nach einem der Ansprüche 10 oder 11, **dadurch gekennzeichnet, dass** die komplementäre Achse (34) des drehbaren Teils eine Schulter (36) zum Aufnehmen und Halten dieses Teils in der axialen Position aufweist.

13. Vorrichtung nach einem der Ansprüche 10 bis 12, **dadurch gekennzeichnet, dass** die Enden der Hauptfeder (15) und der Hilfsfeder (21) an dem drehbaren Teil (30) eingehakt sind, um die Schwenkung dieses Letzteren aufzunehmen.
